# EUROPÄISCHE PATENTSCHRIFT

(11) **EP 2 396 543 B1**
(45) Veröffentlichungstag und Bekanntmachung des Hinweises auf die Patenterteilung: **18.02.2015**
(21) Anmeldenummer: 09805999.1
(22) Anmeldetag: 15.12.2009
(51) Int. Cl.: F03D 11/00

(54) **MASCHINENTRÄGER ZUR AUFNAHME EINER ROTOR-/GENERATORBAUGRUPPE EINER GETRIEBELOSEN WINDENERGIEANLAGE**
MACHINE SUPPORT FOR RECEIVING A ROTOR/GENERATOR ASSEMBLY OF A GEARLESS WIND ENERGY PLANT
SUPPORT DE MACHINE DESTINÉ À RECEVOIR UN MODULE DE ROTOR OU DE GÉNÉRATEUR D'UNE ÉOLIENNE À ENTRAÎNEMENT DIRECT

(30) Priorität: 11.02.2009 DE 102009008437
(43) Veröffentlichungstag der Anmeldung: 21.12.2011
(73) Patentinhaber: VENSYS Energy AG, 66539 Neunkirchen (DE)
(72) Erfinder: MASCIONI, Andreas, 66346 Püttlingen (DE)
(74) Vertreter: Bernhardt, Reinhold
(86) Internationale Anmeldenummer: PCT/DE2009/001757
(87) Internationale Veröffentlichungsnummer: WO 2010/091654

(56) Entgegenhaltungen:
- EP-A1- 1 319 830
- EP-A2- 1 394 406
- WO-A1-2007/008884
- DE-A1-102005 042 394
- DE-A1-102007 058 746

## Beschreibung

Die Erfindung betrifft einen Maschinenträger zur Aufnahme einer Rotor-/ Genera-torbaugruppe einer getriebelosen Windenergieanlage, wobei der Maschinenträger die Rotor-/Generatorbaugruppe mit dem Turm der Windenergieanlage verbindet auf dem Turm drehbar gelagert ist und miteinander verbundene, zueinander im Winkel stehende Rohrabschnitte umfasst, von denen einer mit der Rotor-/Generatorbaugruppe und der andere mit dem Turm verbindbar ist.

Durch Benutzung ist ein solcher Maschinenträger bekannt, dessen Rohrabschnitte über der Rotor-/Generatorbaugruppe bzw. dem Turm abgewandte Endrandflächen miteinander verbunden sind. Dieser Maschinenträger unterliegt hohen statischen, vor allem aber auch dynamischen Belastungen. Dabei kommt es zu Verformungen der Rohrquerschnitte, insbesondere einer Ovalisierung des mit der Rotor-/ Generatorbaugruppe verbindbaren Rohrabschnitts. Nachteilig muss solchen Verformungen durch entsprechend hohen Materialeinsatz entgegengewirkt werden.

Document WO 2 007 008 884 offenbart einen Maschinenträger mit allen technischen Merkmalen des Oberbegriffs des unabhängigen Anspruchs 1.

Der Erfindung liegt die Aufgabe zugrunde, einen neuen Maschinenträger der eingangs erwähnten Art zu schaffen, der bei geringstmöglichem Materialeinsatz die Festigkeitsanforderungen für getriebelose Windenergieanlagen erfüllt.

Der diese Aufgabe lösende Maschinenträger nach der Erfindung ist dadurch gekennzeichnet, dass der mit der Rotor-/Generatorbaugruppe verbindbare Rohrabschnitt über eine der Rotor-/Generatorbaugruppe abgewandte Endrandfläche mit der Mantelfläche des anderen Rohrabschnitts verbunden ist und sich die Mantelfläche des anderen Rohrabschnitts in einen durch die Verbindung umgrenzten Bereich hinein erstreckt.

Durch die erfindungsgemäße Verbindung zwischen den Rohrabschnitten ergibt sich eine deutliche Verbesserung der Stabilität des Maschinenträgers. Insbesondere verstärkt der durch die Verbindung umgrenzte Rohrwandbereich des mit dem Turm verbindbaren anderen Rohrabschnitts den mit der Rotor-/Generatorbaugruppe verbindbaren Rohrabschnitt und verhindert die Ovalisierung seines Querschnitts.

Eine besonders hohe Stabilität wird erreicht, wenn entsprechend einer bevorzugten Ausführungsform der Erfindung die Endrandfläche des mit der Rotor-/ Generatorbaugruppe verbindbaren Rohrabschnitts umlaufend mit der genannten Mantelfläche verbunden ist.

In der bevorzugten Ausführungsform weist der andere, mit dem Turm verbindbare Rohrabschnitt die Form eines sich nach oben verjüngenden Kegels auf. Durch diese Kegelform kann der Maschinenträger besonders hohe, zur Rotordrehachse senkrechte Kippmomente aufnehmen.

Die Mantelfläche bzw. Rohrwand des anderen Rohrabschnitts kann in dem durch die Verbindung umgrenzten Bereich vollständig durchgehend oder bis auf eine Öffnung durchgehend sein. Vorteilhaft bietet eine solche Öffnung Zugang zur Rotor-/Generatorbaugruppe.

Die Öffnung ist zweckmäßig von einem Versteifungsrahmen umgeben, so dass die mit der Öffnung verbundene Festigkeitsminderung des umgrenzten Mantelflächen- bzw. Rohrwandbereichs kompensiert wird.

In weiterer Ausgestaltung der Erfindung kann der andere, mit dem Turm verbindbare Rohrabschnitt an seiner Oberseite eine Deckelwand aufweisen, wobei sich diese Deckelwand unter Materialersparnis vorzugsweise schräg zur Vertikalen, z.B. in einem Winkel von 45°, erstreckt. Diese Deckelwand stabilisiert erheblich den mit dem Turm verbindbaren Rohrabschnitt. In der Deckelwand kann eine Öffnung gebildet sein, so dass durch den Maschinenträger hindurch Zugang zu weiteren im Turmkopf untergebrachten Einrichtungen besteht.

Die Deckelwand kann an ihrem oberen Rand an die Verbindung mit dem mit der Rotor-/Generatorbaugruppe verbindbaren Rohrabschnitt angrenzen.

Der Maschinenträger ist vorzugsweise in einem Stück gegossen. Möglich wäre aber auch eine aus mehreren Teilen zusammengesetzte Schweißkonstruktion.

Die Erfindung wird nachfolgend anhand eines Ausführungsbeispiels und der beiliegenden, sich u.a. auf dieses Ausführungsbeispiel beziehenden Zeichnungen näher erläutert. Es zeigen:
- Fig. 1: einen Maschinenträger nach der Erfindung in einer perspektivischen Ansicht schräg von vom,
- Fig. 2: den Maschinenträger von Fig. 1 in geschnittener Seitenansicht,
- Fig. 3: den Maschinenträger von Fig. 1 in einer perspektivischen Ansicht schräg von hinten,
- Fig. 4: den Maschinenträger von Fig. 1 in einer Schnittansicht gemäß Schnittlinie C-C von Fig. 2, und
- Fig. 5: einen Maschinenträger nach dem Stand der Technik.

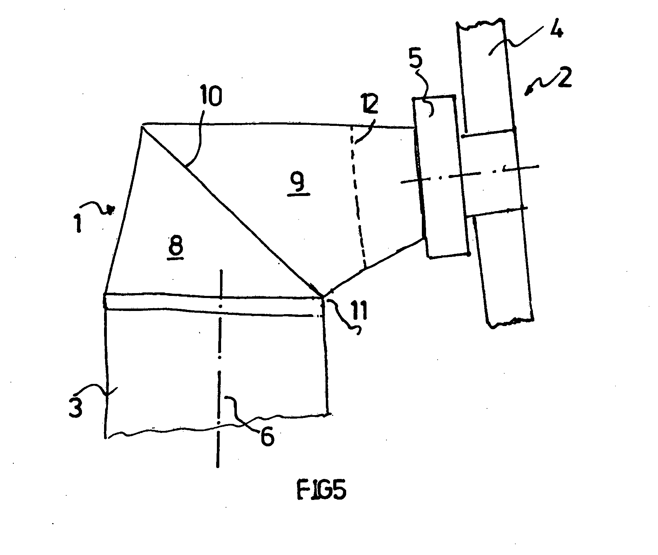

Es wird zunächst auf Fig. 5 Bezug genommen, aus der ein herkömmlicher Maschinenträger 1 hervorgeht. Der Maschinenträger 1 verbindet eine Rotor-/ Generatorbaugruppe 2 mit einem Turm 3 einer Windenergieanlage. Ein Rotor 4 der Rotor-/ Generatorbaugruppe 2 steht ohne Getriebe in direkter Antriebsverbindung mit einem Generator 5. Über den Generator 5 ist die Rotor-/Generatorbaugruppe 2 mit dem Maschinentröger 1 verbunden. Der Maschinenträger 1 lässt sich auf dem Turm 3 um eine Achse 6 drehen.

Der Maschinenträger 1 umfasst zwei kegelförmige Rohrabschnitte 8 und 9. Über einander zugewandte Endrandflächen sind die Rohrabschnitte 8 und 9 bei 10 unter Bildung eines durchgehenden Rohrinnenraums miteinander verbunden.

Insbesondere dynamische, durch den Rotor 4 übertragene Kräfte belasten den Maschinenträger 1, wobei sich eine besonders kritische Belastung bei 11 ergibt. Durch solche Belastungen verursachten Ovalisierungen des Rohrabschnitts 9 kann nur unzureichend durch eine bei 12 angedeutete, punktweise abstützende Versteifungsscheibe entgegengewirkt werden.

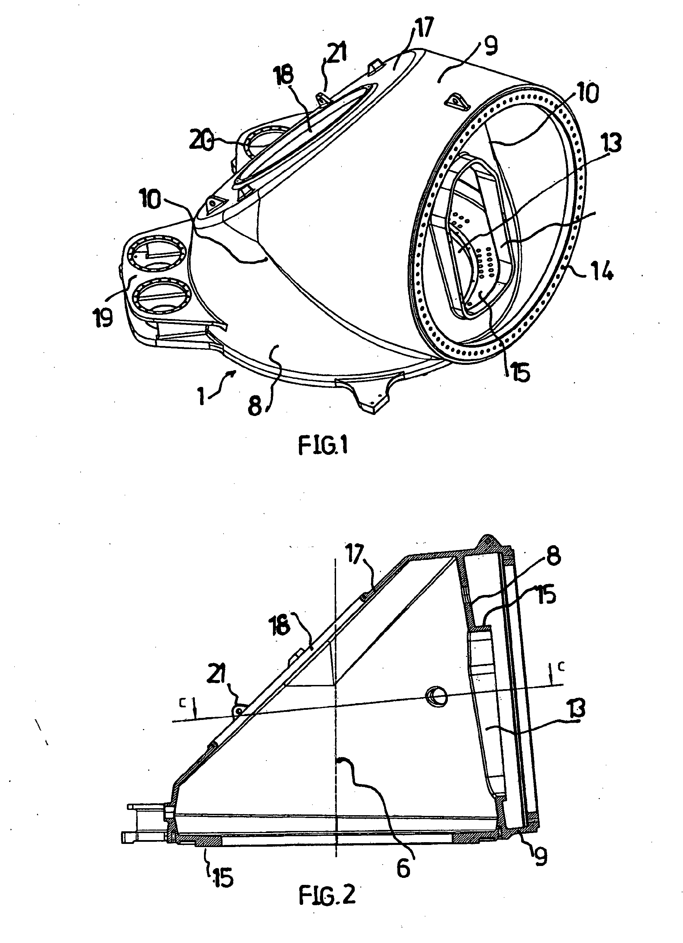

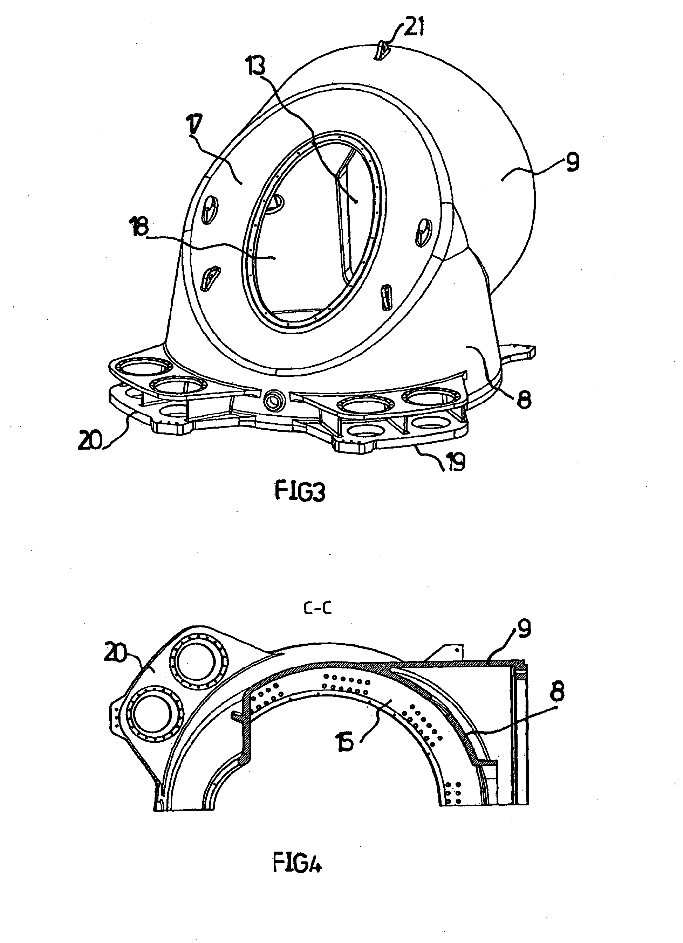

Ein in den Fig. 1 bis 4 gezeigter Maschinenträger 1 einer Windenergieanlage ist einstückig als Gussteil ausgebildet und weist einen kegelförmigen Rohrabschnitt 8 und einen etwa zylindrischen Rohrabschnitt 9 auf. Bei 10 ist der Rohrabschnitt 9 umlaufend über eine durch den Rohrwandquerschnitt gebildete Endrandfläche mit der äußeren Mantelfläche des Rohrabschnitts 8 verbunden. Durch die Verbindung 10 ist kein durchgehender Rohrinnenraum, wie bei dem Maschinenträger von Fig. 5, gebildet, sondern die Mantelfläche bzw. Rohrwand des Rohrabschnitts 8 erstreckt sich, abgesehen von einer Öffnung 13, durchgehend über den durch die umlaufende Verbindung 10 umgrenzten Bereich.

Am freien Ende weisen die Rohrabschnitte 8,9 jeweils einen Verbindungsflansch 14 bzw. 15 auf, wobei der Verbindungsflansch 14 der Verbindung mit dem Generator einer Rotor-/Generatorbaugruppe und der Verbindungsflansch 15 der Verbindung mit dem Turm der Windenergieanlage dient.

Wie insbesondere Fig. 1 und 2 erkennen lassen, umgibt die Öffnung 13 eine umlaufende Rahmenverstärkung 16.

Der Rohrabschnitt 8 ist oben durch eine Deckelwand 17 mit einer Öffnung 18 verschlossen. Die zur Drehachse geneigte Deckelwand 17 des Maschinenträgers steht zur Drehachse etwa im Winkel von 45°.

Von dem Rohrabschnitt 8 am unteren Rand radial vorstehende Halter 19 und 20 dienen der Aufnahme von insgesamt vier zum Drehantrieb des Maschinenträgers 1 vorgesehener Motor-/Getriebeeinheiten (nicht gezeigt).

An dem Maschinenträger 1 sind außenseitig mehrere Ösen 21 zur Anbringung von Montagehalterungen angebracht.

Der in den Fig. 1 bis 4 gezeigte Maschinenträger 1 kann anders als der Maschinenträger von Fig. 5 die durch die Rotor-/Generatorbaugruppe übertragenen dynamischen Lasten ohne merkliche Verformungen auf den Turm übertragen. Diese verbesserte Lastabtragung ist darauf zurückzuführen, dass der Rohrabschnitt 9 mit seinem dem Flansch 14 abgewandten Endrand umlaufend mit der Mantelfläche des Rohrabschnitts 8 verbunden ist, wobei die Mantelfläche bzw. Rohrwand, bis auf die Öffnung 13, in dem von der Verbindung 10 umschlossenen Bereich durchgeht. Hierdurch wird insbesondere einer Ovalisierung des Rohrabschnitts 9 entgegengewirkt. Der Rohrabschnitt 9 ist kurz und ragt an der Unterseite nahe bis an den kegelförmigen Rohrabschnitt 8 heran. Auch dies trägt zur Verringerung von Verformungen des Maschinenträgers 1 unter Belastung bei. Der Maschinenträger 3 kann daher insgesamt materialsparend hergestellt werden.

## Patentansprüche

1. Maschinenträger (1) zur Aufnahme einer Rotor-/Generatorbaugruppe (2) einer getriebelosen Windenergieanlage, wobei der Maschinentröger (1) die Rotor-/Generatorbaugruppe (2) mit dem Turm (3) der Windenergieanlage verbindet, auf dem Turm (3) drehbar gelagert ist und miteinander verbundene, zueinander im Winkel stehende Rohrabschnitte (8,9) umfasst, von denen einer (9) mit der Rotor-/Generatorbaugruppe (2) und der andere (8) mit dem Turm (3) verbindbar ist,
**dadurch gekennzeichnet,**
**dass** der mit der Rotor-/Generatorbaugruppe (2) verbindbare Rohrabschnitt (9) über eine der Rotor-/Generatorbaugruppe (2) abgewandte Endrandfläche mit der Mantelfläche des anderen Rohrabschnitts (8) verbunden ist und sich die Mantelfläche des anderen Rohrabschnitts (8) in einen durch die Verbindung (10) umgrenzten Bereich hinein erstreckt.

2. Maschinentröger nach Anspruch 1,
**dadurch gekennzeichnet,**
**dass** der mit der Rotor-/Generatorbaugruppe (2) verbindbare Rohrabschnitt (9) umlaufend mit der Mantelfläche des anderen Rohrabschnitts (8) verbunden ist.

3. Maschinenträger nach Anspruch 1 oder 2,
**dadurch gekennzeichnet,**
**dass** sich der andere Rohrabschnitt (8) nach oben kegelförmig verjüngt.

4. Maschinentröger nach einem der Ansprüche 1 bis 3,
**dadurch gekennzeichnet,**
**dass** die Mantelfläche in dem durch die Verbindung (10) umgrenzten Bereich durchgehend oder bis auf eine Öffnung (13) durchgehend ist.

5. Maschinentröger nach Anspruch 4,
**dadurch gekennzeichnet,**
**dass** die Öffnung (13) von einem Versteifungsrahmen (16) umgeben ist.

6. Maschinenträger nach einem der Ansprüche 1 bis 5,
**dadurch gekennzeichnet,**
**dass** der andere Rohrabschnitt (8) an seiner Oberseite eine Deckelwand (17) aufweist.

7. Maschinenträger nach Anspruch 6,
**dadurch gekennzeichnet,**
**dass** die obere Deckelwand (17) schräg zur Vertikalen, vorzugsweise im Winkel von 45°, steht.

8. Maschinenträger nach Anspruch 6 oder 7,
**dadurch gekennzeichnet,**
**dass** die Deckelwand (17) an ihrem oberen Rand an die Verbindung (10) mit dem mit der Rotor-/Generatorbaugruppe (2) verbindbaren Rohrabschnitt (9) angrenzt.

9. Maschinenträger nach einem der Ansprüche 6 bis 8,
**dadurch gekennzeichnet,**
**dass** die Deckelwand (17) eine Öffnung (18) aufweist.

10. Maschinenträger nach einem der Ansprüche 1 bis 9,
**dadurch gekennzeichnet,**
**dass** der Maschinentröger (1) in einem Stück gegossen oder als Schweißkonstruktion hergestellt ist.

## Claims

1. Machine support (1) for receiving a rotor/generator assembly (2) of a gearless wind turbine, wherein the machine support (1) connects the rotor/generator assembly (2) to the mast (3) of the wind turbine, is rotatably mounted on the mast (3) and comprises interconnected tube sections (8, 9) positioned at an angle to each other, one (9) of which can be connected to the rotor/generator assembly (2) and the other (8) to the mast (3), **characterized in that** the tube section (9) which can be connected to the rotor/generator assembly (2) is connected to the lateral surface of the other tube section (8) via an end edge face facing away from the rotor/generator assembly (2), and the lateral surface of the other tube section (8) extends into a region surrounded by the connection (10).

2. Machine support according to Claim 1, **characterized in that** the tube section (9) which can be connected to the rotor/generator assembly (2) is connected circumferentially to the lateral surface of the other tube section (8).

3. Machine support according to Claim 1 or 2, **characterized in that** the other tube section (8) tapers conically upwards.

4. Machine support according to one of Claims 1 to 3, **characterized in that**, in the region surrounded by the connection (10), the lateral surface is continuous or continuous apart from an opening (13).

5. Machine support according to Claim 4, **characterized in that** the opening (13) is enclosed by a reinforcing frame (16).

6. Machine support according to one of Claims 1 to 5, **characterized in that** the other tube section (8) has a cover wall (17) on its upper face.

7. Machine support according to Claim 6, **characterized in that** the upper cover wall (17) is inclined to the vertical, preferably at an angle of 45°.

8. Machine support according to Claim 6 or 7, **characterized in that** the cover wall (17) adjoins at its upper edge the connection (10) to the tube section (9) which can be connected to the rotor/generator assembly (2).

9. Machine support according to one of Claims 6 to 8, **characterized in that** the cover wall (17) has an opening (18).

10. Machine support according to one of Claims 1 to 9, **characterized in that** the machine support (1) is produced as a one-piece casting or as a welded structure.

## Revendications

1. Support de machine (1) destiné à recevoir un module de rotor/générateur (2) d'une éolienne à entraînement direct, le support de machine (1) reliant le module de rotor/générateur (2) au pylône (3) de l'éolienne, étant logé de manière rotative sur le pylône (3) et comprenant des sections tubulaires (8,9) reliées l'une à l'autre, formant un angle l'une par rapport à l'autre, dont l'une (9) peut être reliée au module de rotor/générateur (2) et l'autre (8) au pylône (3), **caractérisé en ce que** la section tubulaire (9) pouvant être reliée au module de rotor/générateur (2) est reliée via une surface de bord d'extrémité opposée au module de rotor/générateur (2) à la surface d'enveloppe de l'autre section tubulaire (8) et la surface d'enveloppe de l'autre section tubulaire (8) s'étend dans une zone délimitée par le raccord (10).

2. Support de machine selon la revendication 1, **caractérisé en ce que** la section tubulaire (9) pouvant être reliée au module de rotor/générateur (2) est reliée de manière périphérique à la surface d'enveloppe de l'autre section tubulaire (8).

3. Support de machine selon la revendication 1 ou 2, **caractérisé en ce que** l'autre section tubulaire (8) se rétrécit en forme de cône vers le dessus.

4. Support de machine selon l'une quelconque des revendications 1 à 3, **caractérisé en ce que** la surface d'enveloppe est continue ou est continue à une ouverture (13) près dans la zone délimitée par le raccord (10).

5. Support de machine selon la revendication 4, **caractérisé en ce que** l'ouverture (13) est entourée par un cadre de rigidification (16).

6. Support de machine selon l'une quelconque des revendications 1 à 5, **caractérisé en ce que** l'autre section tubulaire (8) présente une paroi de couvercle (17) sur sa face supérieure.

7. Support de machine selon la revendication 6, **caractérisé en ce que** la paroi de couvercle (17) supérieure est inclinée par rapport à la verticale, de préférence d'un angle de 45°.

8. Support de machine selon la revendication 6 ou 7, **caractérisé en ce que** la paroi de couvercle (17) est contiguë, en son bord supérieur, au raccord (10) avec la section tubulaire (9) pouvant être reliée au module de rotor/générateur (2).

9. Support de machine selon l'une quelconque des revendications 6 à 8, **caractérisé en ce que** la paroi de couvercle (17) présente une ouverture (18).

10. Support de machine selon l'une quelconque des revendications 1 à 9, **caractérisé en ce que** le support de machine (1) est coulé en une pièce ou est réalisé sous forme de construction soudée.
